Europäisches Patentamt

(19) European Patent Office

Office européen des brevets

(11) Numéro de publication: **0 166 837**
**B1**

(12) **FASCICULE DE BREVET EUROPEEN**

(45) Date de publication du fascicule du brevet:
**01.06.88**

(21) Numéro de dépôt: **84430023.6**

(22) Date de dépôt: **29.06.84**

(51) Int. Cl.⁴: **H 04 J 3/14**

(54) **Dispositif de rebouclage pour un système de communication de données sur une liaison multiplex.**

(43) Date de publication de la demande:
**08.01.86 Bulletin 86/2**

(45) Mention de la délivrance du brevet:
**01.06.88 Bulletin 88/22**

(84) Etats contractants désignés:
**DE FR GB IT**

(56) Documents cités:
**US - A - 4 059 729**
**US - A - 4 419 751**

(73) Titulaire: **International Business Machines Corporation,
Old Orchard Road, Armonk, N.Y. 10504 (US)**
(84) Etats contractants désignés: **DE GB IT**

(73) Titulaire: **Compagnie IBM FRANCE, 5 Place Vendôme,
F-75000 Paris 1er (FR)**
(84) Etats contractants désignés: **FR**

(72) Inventeur: **Montanari, Gerard Michel Résidences
Cagnes II, Le Sirius E 50, Chemin du Val Fleuri,
F-06800 Cagnes-sur-Mer (FR)**
Inventeur: **Baudelot, Francis Eric, 17, Avenue
Caravadossi, F-06000 Nice (FR)**
Inventeur: **Costes, Michel Leon, Le Verdon-F Domaine
du Loup, F-06800 Cagnes-sur-Mer (FR)**

(74) Mandataire: **Lattard, Nicole, Compagnie IBM France
Département de Propriété Intellectuelle, F-06610 La
Gaude (FR)**

## Description

La présente invention concerne un dispositif permettant de réaliser un rebouclage en vue de tester dans une liaison multiplex au moins une ligne, sans perturber le fonctionnement des autres lignes.

L'utilisation de liaison multiplex pour diminuer le coût des câbles dans les installations de réseaux de communications est de plus en plus répandue.

La recommandation CCITT X 22 définit un interface, qui peut être attaché à un contrôleur de communications sur lequel les données reçues et à transmettre sont multiplexées.

Dans ce type de liaison, ainsi que définit par la recommandation chaque fenêtre de temps à l'intérieur de chaque trame est affectée à l'échange de 6 ou 8 bits d'une ligne de communications déterminée.

Le débit maximum autorisé sur la liaison est de 48 kilobits/seconde et en conséquence le nombre de lignes qui peuvent être attachées à la liaison multiplex, dépend du débit binaire sur chacune des lignes.

Dans un système de communications de données, un test classique permettant de s'assurer du bon fonctionnement des circuits associés à une ligne consiste à reboucler l'interface transmission de la ligne sur l'interface réception et à comparer les données transmises à celles reçues.

Lorsque l'échange des données se fait par une liaison multiplex, il se pose un problème pour réaliser ce test, par le fait que pendant le test d'une ligne toutes les autres lignes attachées à la liaison ne peuvent plus être utilisées pour l'échange de données car elles sont aussi rebouclées.

En conséquence, un objet de la présente invention est de réaliser un dispositif permettant de faire le test en rebouclage d'une ou de plusieurs lignes de communication attachées à une liaison multiplex sans perturber les autres lignes attachées à la même liaison.

La présente invention concerne donc un dispositif de rebouclage destiné à un système de communications de données sur au moins une liaison multiplex dans laquelle chaque fenêtre de temps d'une trame est affectée à la transmission et à la réception de bits de données relatif à une ligne de communication. Il permet de tester au moins une ligne sans perturber le fonctionnement des autres lignes attachées à la même liaison. Le système de communications comporte des moyens pour envoyer les bits de données dans chacune des fenêtres de temps et des moyens pour recevoir les bits de données en provenance de la liaison multiplex. Un tel dispositif est décrit dans le document US-A-4 059 729.

Le dispositif de rebouclage comprend des moyens pour mettre un bit de contrôle de rebouclage (W) associé aux bits à transmettre dans chacune des fenêtres de temps dans un premier ou un second état indiquant le mode de fonctionnement en rebouclage de normal de la ligne. Des moyens sont sensibles à l'état du bit de contrôle de rebouclage pour provoquer soit l'envoi des bits de données provenant des moyens de transmissions au moyens de réception pendant les fenêtres de temps pour lesquelles le bit est dans un premier état, soit l'envoi des bits de données en provenance des moyens de transmission sur la liaison multiplex et l'envoi des bits reçus de la liaison, au système de communication pendant les fenêtres de temps pour lesquelles le bit de contrôle de rebouclage est dans le second état.

La fig. 1 représente le schéma global d'un contrôleur de communications dans lequel peut être incorporé le dispositif de la présente invention;

la fig. 2 représente le schéma général d'un adaptateur de lignes du contrôleur de la fig. 1;

la fig. 3 représente à titre d'exemple comment peuvent être affectées les fenêtres de temps sur la liaison multiplex dans deux configurations distinctes;

la fig. 4 représente le schéma détaillé d'un circuit d'interface de lignes dans lequel est incorporé le dispositif de rebouclage conforme à l'invention;

la fig. 5 représente le schéma d'un circuit logique réalisant la fonction du circuit 51 de la fig. 4.

Le système de la présente invention peut être utilisé dans tout système de communications comportant des liaisons multiplex. Il sera décrit dans l'environnement d'un contrôleur de communication du type IBM 3725 qui comporte un dispositif de balayage de lignes décrit dans la demande de brevet européen publiée le 04.05.83 sous le numéro 0077 863.

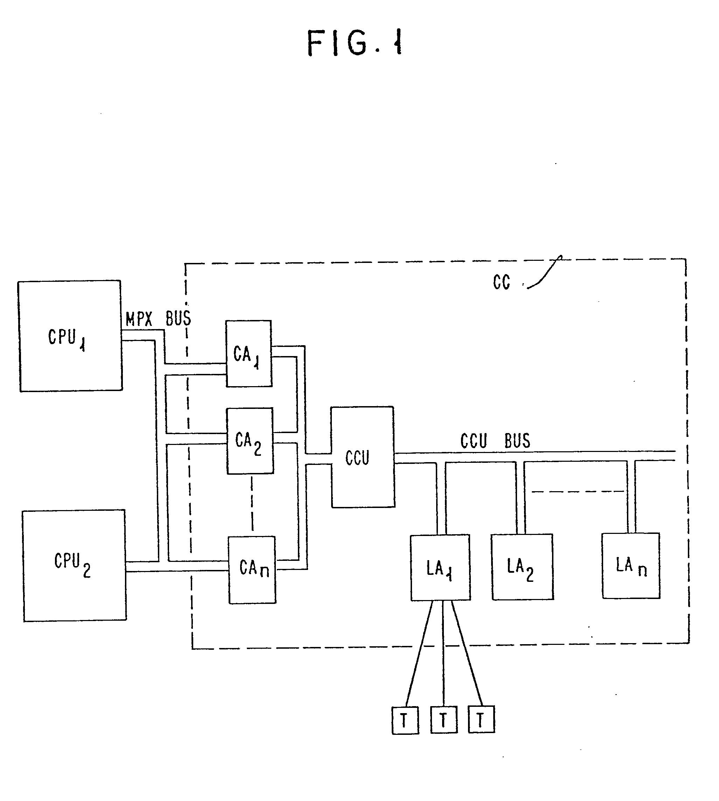

Comme on peut le voir sur la fig. 1, le contrôleur de communications CC est un élément d'un réseau de télétraitement dont on peut trouver un exemple de configuration dans l'ouvrage «Téléinformatique» par G. Macchi et J.E. Guilbert. Dans le contrôleur CC l'unité de commande centrale est située entre des terminaux T et des unités centrales de traitement CPU1 et CPU2. L'unité CCU est reliée aux canaux multiplex MPX BUS, des unités centrales de traitement CPU1 et CPU2 par des adaptateurs de canaux CA1...CAn. Elle est aussi reliée aux terminaux T au travers d'adaptateurs de lignes LA1...LAn connectés à un bus CCU BUS.

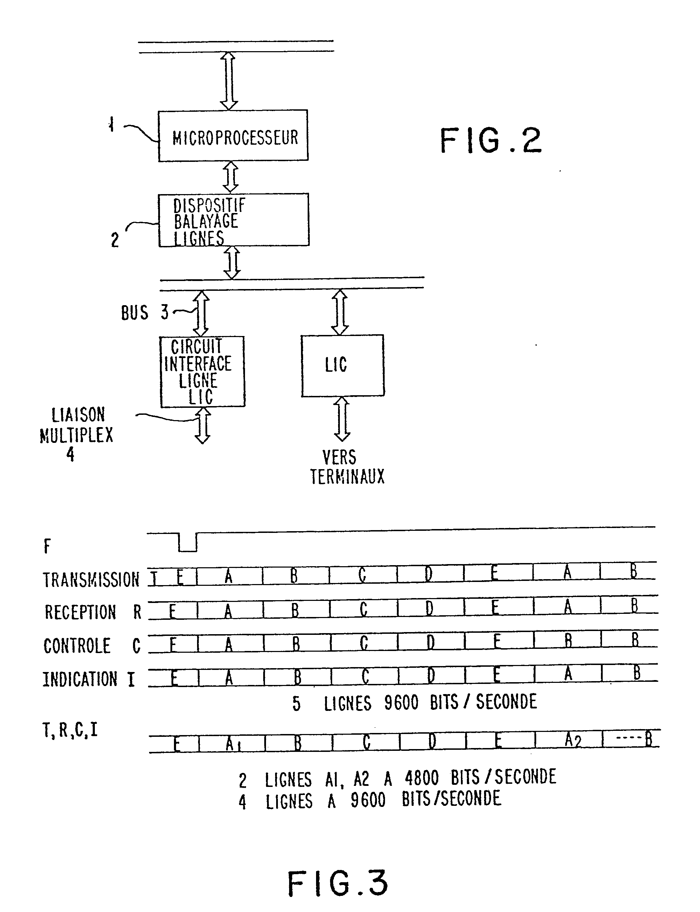

Chaque adaptateur de lignes est du type décrit dans la demande de brevet ci-dessus référencée. Il est représenté schématiquement sur la fig. 2 sur laquelle ont peut voir qu'il comporte un microprocesseur 1 et un dispositif de balayage 2. Ce dispositif de balayage 2 comporte essentiellement des mémoires pour stocker temporairement les données à échanger entre les terminaux et l'unité de traitement centrale 1, des moyens pour sérialiser/désérialiser les bits de données à envoyer et reçues et des moyens d'adressage pour adresser séquentiellement les lignes de communications à balayer.

Plusieurs circuits d'interface de lignes LIC sont connectés par un bus 3 au dispositif de balayage de lignes et permettant d'envoyer les bits de données destinés aux lignes adressées et de recevoir les bits de données des lignes adressées.

Dans un contrôleur de ce type chaque adaptateur de lignes a un débit global de 256 kilobits par seconde et en conséquence il peut gérer un nombre de lignes qui dépend du débit binaire sur lesdites lignes et de la capacité mémoire de l'adaptateur.

En conséquence, il est possible de connecter à un adaptateur un ou plusieurs circuits d'interface appropriés pour échanger les bits de données non plus sur des lignes de communications distinctes mais sur une liaison multiplex qui peut être du type X 22.

Sur la liaison multiplex 4, type X 22 le débit binaire de 48 kilobits/seconde peut être partagé entre plusieurs lignes de communications. Le nombre de lignes qui peuvent être attachées à la liaison dépend du débit binaire sur chacune des lignes. Par exemple, on peut attacher 5 lignes à 9600 bits/seconde ou 4 lignes à 9600 bits/seconde et 2 lignes à 4800 bits/seconde ou 20 lignes à 2400 bits/seconde ou n'importe quelle combinaison de lignes pourvu que le débit ne dépasse pas le maximum admissible et soit compatible avec le CCITT X 54 définissant les configurations autorisées.

Dans chaque cas, à chaque ligne est affectée au moins une fenêtre de temps à l'intérieur d'une trame définie par un signal de début de trame F (Frame Start Identification). Chaque fenêtre de temps peut contenir 6 ou 8 bits à la fréquence du signal de synchronisation du signal élément S: (Signal Element Timing).

Sur la fig. 3 est représentée l'affectation des fenêtres de temps dans le cas d'une configuration de 5 lignes à 9600 bits/seconde A, B, C, D et E et d'une configuration comprenant deux lignes à 4800 bits/seconde A1 et A2 et 4 lignes à 9600 bits/seconde B, C, D et E.

Le circuit d'interface de ligne LIC réalise le multiplexage des bits à transmettre à l'intérieur des fenêtres de temps et le démultiplexage des bits de données reçus.

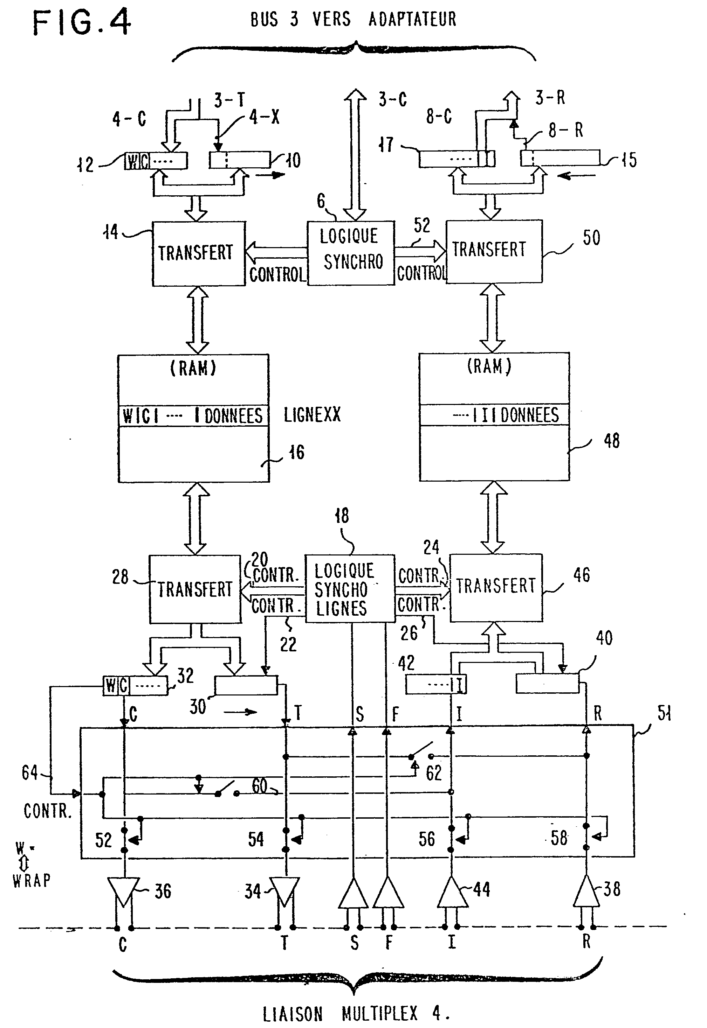

La fig. 4 représente un tel circuit, comprenant en outre le système de rebouclage de la présente invention.

Le bus 3 de la fig. 1 est subdivisé en trois parties. La première: bus 3 – T amène au circuit d'interface LIC, à chaque période de balayage des lignes, le bit à transmettre par la ligne balayée, sur le fil 4–X et les bits de contrôle associés sur les fils 4–C. La seconde: bus 3 – C permet d'échanger entre le dispositif de balayage et le circuit d'interface, des signaux de contrôle et de synchronisation, tels que les signaux d'adresse de lignes, d'adresse de registres, de commande de lecture ou d'écriture, etc. Ces signaux sont amenés à un circuit logique de synchronisation 6. La troisième: bus 3–R permet d'envoyer au dispositif de balayage, à chaque période de balayage de lignes le bit reçu, sur le fil 8–R et les bits de contrôle associés sur le bus 8–C.

Le fil 4–X est connecté à la position extrême gauche d'un registre à décalage 10 et le bus 4–C est connecté à un registre 12, pour stocker les bits de contrôle associés au bit à transmettre.

Un circuit de transfert 14 placé sous contrôle du circuit logique 6 a pour fonction de transférer aux instants appropriés le contenu des registres 10 et 12 dans une zone adressée de la mémoire. Chaque zone de la mémoire 16 est affectée à une ligne.

Un second circuit logique de synchronisation 18 de lignes reçoit les signaux S et F de la liaison multiplex et génère à partir de ces signaux, des signaux de contrôle appropriés sur les bus 20, 22, 24 et 26.

Le signal sur le bus 20 est appliqué à un circuit de transfert 28 pour transférer aux instants appropriés le contenu d'une zone de mémoire adressée par le dispositif 28 dans deux registres de sortie. Le premier 30 est un registre à décalage qui reçoit de la mémoire 16, les bits de données à transmettre et le second 32 est un registre qui reçoit les bits de contrôle associés.

Pour ce faire le dispositif 18 comporte des moyens de comptages des signaux S et F pour repérer les trames et les fenêtres de temps à l'intérieur des trames et un pointeur d'adresses qui détermine l'adresse dans la mémoire 16 de la zone affectée à chaque ligne en fonction de la configuration des lignes attachées à la liaison. Comme on peut le voir en référence à la fig. 3, à chaque ligne est affectée une fenêtre de temps à l'intérieur d'une trame.

Les signaux sur le bus de contrôle 22 commandent le décalage vers la droite du registre 30 pour envoyer en série les bits contenus dans le registre 30 sur le fil d'interface T de la liaison multiplex 4, par un circuit d'attaque DRV 34.

Le bit de contrôle C du registre 32 est envoyé par le circuit d'attaque 36 au fil d'interface C de la liaison 4. Dans le cas d'un interface type X 22 seul un bit du registre 32 est utilisé à savoir le bit C défini par le standard CCITT X 22.

Du côté réception, les bits reçus de la liaison 4 sont transmis par le récepteur RCV 38 à un registre à décalage 40 dans sa position extrême droite. Le décalage à gauche du registre 40 est contrôlé par le circuit de synchronisation 18 par le bus de commande 26 de telle sorte que les bits reçus en série soient désérialisés dans le registre 40, dont le contenu est décalé à la fréquence du signal S.

Dans le cas de l'interface X 22, il n'y a qu'un bit de contrôle associé au bit reçu à savoir le bit indication I défini par le standard CCITT X 22. Il est transmis à un registre 42 par le récepteur 44.

Un circuit de transfert 46, sous contrôle du circuit 18 qui lui fournit par le bus 24, les adresses des zones de mémoires affectées aux lignes et donc aux fenêtres de temps de la liaison multiplex, transfère le contenu des registres 42 et 40 aux instants appropriés dans les zones adressées d'une mémoire 48. Dans la mémoire 48, une zone est affectée à chaque ligne de communication pour stocker un multiplet de bits de données et les bits de contrôle associés.

Le circuit de transfert 50 sous contrôle du circuit logique de synchronisation 6 envoie le contenu des zones de mémoires adressées par le bus 52 aux instants appropriés aux registres 15 et 17.

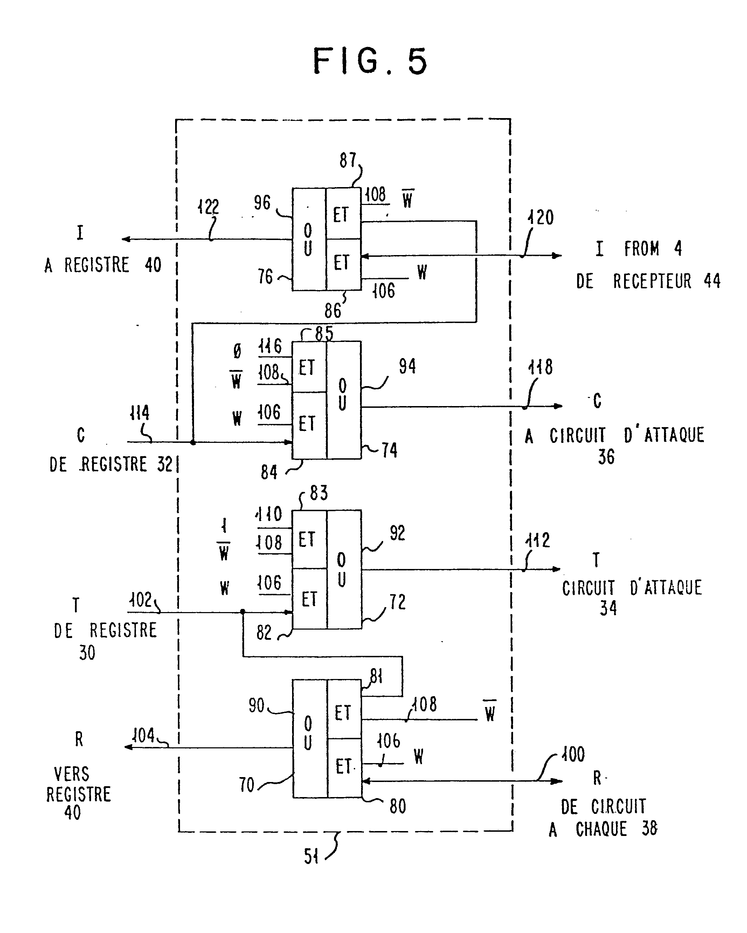

Le dispositif de rebouclage conforme à la présente invention comprend un ensemble logique 51 qui est représenté sur la fig. 1 comme comprenant des commutateurs 52, 54, 56, 58 et 60, 62. Un schéma logique équivalent qui peut être utilisé comme ensemble 51 est représenté sur la fig. 5.

En fonctionnement normal, les commutateurs 52, 54, 56 et 58 sont fermés et les commutateurs 60 et 62 sont ouverts comme représenté sur la fig. 4. Pour réaliser un rebouclage les commutateurs 52, 54, 56 et 58 sont ouverts et les commutateurs 60 et 62 sont fermés.

Afin de pouvoir réaliser le rebouclage pour des lignes sélectionnées sans empêcher les autres lignes de fonctionner normalement, l'ouverture et la fermeture des commutateurs sont commandées par un bit W qui fait partie des bits de contrôle associés au bit à transmettre, et qui est envoyé par le contrôleur dans le registre 12 avec une valeur W ou $\overline{W}$ suivant qu'un rebouclage pour la ligne balayée est nécessaire ou non. Par exemple, il peut être mis à 0 pour signifier qu'un rebouclage est à effectuer et à 1 dans le cas contraire.

Ce bit est transmis au registre 32 et sert à commander l'ouverture ou la fermeture des commutateurs par la ligne 64.

Le fonctionnement du circuit d'interface de ligne de la fig. 4 est le suivant.

Du côté transmission, à chaque instant de balayage d'une ligne, le bit à envoyer est stocké dans le registre 10, dans la position extrême gauche et le contenu du registre est décalé d'une position vers la droite. Les bits de contrôle associés sont écrits dans le registre 12, le bit W étant mis à la valeur appropriée suivant qu'un rebouclage est nécessaire ou non pour la ligne balayée.

L'adresse de la ligne balayée est reconnue par un mécanisme non représenté similaire à celui décrit dans la demande de brevet européen déjà cité, et le circuit logique 6 provoque le transfert du contenu du registre 10 une fois décalé dans la zone de la mémoire 16 affectée à la ligne balayée.

Lorsque cette même ligne est balayée de nouveau le contenu de la zone de la mémoire 16 est retransféré dans le registre 10, le bit reçu est introduit dans ce registre dans la position extrême gauche et le contenu du registre est décalé d'une position vers la droite.

Les bits de contrôle associés C et W ou $\overline{W}$ sont écrits dans le registre 12 et les contenus des registres 10 et 12 sont transférés dans la mémoire.

Après 6 ou 8 balayages de la ligne 6 où 8 bits de données auront été traités de la façon indiquée précédemment et seront donc désérialisés pour constituer dans la zone de la mémoire 16, un multiplet prêt à être transmis dans une fenêtre de temps affectée à la ligne.

Le circuit 18 adresse la zone de mémoire par le bus 20 pour que le circuit 28 transfert le contenu de la zone de mémoire dans les registres de sortie 30 et 32 afin que les bits de données soient envoyés en série par le registre à décalage 30 au circuit d'attaque 34 lorsque le commutateur 54 est fermé et que la commutateur 62 est ouvert (pas de rebouclage) et le bit de contrôle C est envoyé au circuit d'attaque 36, lorsque le commutateur 52 est fermé et que le commutateur 60 est ouvert.

Pour les lignes pour lesquels un rebouclage est nécessaire, pendant toutes les fenêtres de temps affectées à ces lignes pour lesquels le bit W sera à 0, les commutateurs 52 et 54 seront ouverts et 60 et 62 sont fermés de sorte que pour ces lignes les bits de données dans le registre 30 seront envoyés à l'entrée du registre à décalage 40 du côté réception et seront traités comme des bits reçus de façon à réaliser le test en rebouclage. Le bit de contrôle C est utilisé comme bits de contrôle I pour les bits reçus.

Du côté réception, les bits reçus en série de la liaison multiplex par le récepteur 38, ou reçus du registre 30 pour les lignes qui sont en rebouclage, sont désérialisés et assemblés pour former un multiplet de 8 ou 6 bits dans le registre à décalage 40 et les bits de contrôle associés pour chacune des lignes sont reçus dans le registre 42.

Lorsqu'un multiplet est prêt, il est transféré sous contrôle du circuit 18 à la zone de la mémoire 48 affectée à la ligne à laquelle le multiplet est destiné.

Lorsque chaque ligne est balayée par le dispositif de balayage 2 dans l'adaptateur de lignes, les bits contenus dans la zone de la mémoire 48 affectée à la ligne balayée sont transférés dans les registres 15 et 17. Le registre 15 est décalé vers la gauche et le bit dans la position extrême gauche est envoyé au dispositif de balayage avec les bits de contrôle associés dans le registre 17. Puis les contenus des registres 15 et 17 sont retransférés dans la zone affectée à la ligne dans la mémoire 48.

Cette opération est répétée à chaque balayage de ligne, pour que le dispositif de balayage de ligne reçoive les 6 ou 8 bits de données bit à bit et les traite comme décrit dans la demande de brevet européen citée au début de la description.

Lorsque les 6 ou 8 bits sont envoyés le multiplet de la fenêtre de temps suivante affecté à la ligne est assemblée dans le registre 40 pour être traité comme précédemment décrit.

Les opérations sont les mêmes pour chaque fenêtre de temps.

En conséquence les bits de données provenant des lignes qui sont en rebouclage seront analysés afin de réaliser le test de la façon classique.

Sur la fig. 5 le schéma d'une logique qui peut être utilisée pour réaliser la fonction du circuit 51, est représenté.

Ce circuit logique comprend quatre ensemble de portes ET et OU 70, 72, 74 et 76 qui comporte chacun deux portes ET d'entrée 80, 81; 82, 83; 84, 85 et 86, 87 et une porte OU de sortie 90, 92, 94 et 96 respectivement.

L'ensemble 70 est utilisé pour transmettre soit les bits reçus de la liaison 4 par le circuit d'attaque, par le fil 100, soit les bits transmis venant du registre 30 par le fil 102, au registre 40 par le fil 104.

L'ensemble 76 est utilisé pour transmettre soit le bit I reçu de la liaison 4 par le récepteur 44, par le fil 120, soit le bit C venant du registre 32 par le fil 114, au registre 40 par le fil 122.

Les ensembles 92 et 74 sont utilisés pour transmettre les bits de données à envoyer du registre 30 (fil 102) au circuit d'attaque 34 pour fil 112, et le bit C du registre 32 (fil 114), au circuit d'attaque 36 par le fil 118.

Lorsque W = 1 : mode normal.

La porte ET 80 est ouverte et la porte 81 est fermée, les bits reçus du circuit d'attaque 38 sont envoyés au registre 40.

La porte ET 82 est ouverte, les bits à transmettre venant du registre 30 sont envoyés au circuit d'attaque 34.

La porte ET 84 est ouverte, le bit C du registre 32 est envoyé au circuit d'attaque 36.

La porte ET 86 est ouverte et la porte ET 87 est fermée, le bit I du récepteur 44 est envoyé au registre 40.

Lorsque W = 0 : rebouclage.

Les portes ET 82 et 80 sont fermées et la porte ET 81 est ouverte et les bits à transmettre sont envoyés du registre 30 au registre 40.

La porte ET 83 est ouverte. Cette porte reçoit sur une de ces entrées des 1 de telle sorte que des 1 sont envoyés par le fil 112 au circuit d'attaque, de façon à satisfaire aux conditions imposées par le standard CCITT X 22.

Les portes ET 84 et 86 sont fermées et la porte ET 87 est ouverte de telle sorte que le bit C du registre 32 est envoyé au registre 42.

La porte ET 85 est ouverte, elle reçoit sur une de ces entrées des 0 de telle sorte que des 0 sont envoyés par le fil 118 au circuit d'attaque 36, de façon à satisfaire aux conditions imposées par le standard CCITT X 22, comme précédemment.

**Revendications**

1. Dispositif de rebouclage destiné à un système de communications de données sur au moins une liaison multiplex dans laquelle chaque fenêtre de temps d'une trame est affectée à la transmission et à la réception de bits de données relatifs à une ligne de communication, pour tester au moins une ligne sans perturber le fonctionnement des autres lignes attachées à la même liaison; ledit système de communication comprenant des moyens pour envoyer les bits de données dans chacune des fenêtres de temps et des moyens pour recevoir les bits de données en provenance de la liaison multiplex, caractérisé en ce qu'il comprend:

des moyens (2, 12) pour mettre un bit de contrôle associé aux bits à transmettre dans chacune des fenêtres de temps dans un premier ou un second état indiquant le mode de fonctionnement en rebouclage ou normal de la ligne,

des moyens (32, 51) qui sont sensibles à l'état dudit bit de contrôle du rebouclage pour provoquer soit l'envoi des bits de données provenant des moyens de transmission aux moyens de réception pendant les fenêtres de temps pour lesquelles le bit est dans le premier état (0); soit l'envoi des bits de données provenant des moyens de transmission sur la liaison multiplex et l'envoi des bits reçus de la liaison multiplex au système de communication pendant les fenêtres de temps pour lesquelles le bit est dans le second état (1).

2. Dispositif selon la revendication 1, caractérisé en ce que le bit de contrôle est un des bits de contrôle du multiplets de contrôle associé au bit à transmettre.

3. Dispositif de rebouclage selon la revendication 1 ou 2 destiné à un système de communication (cc) assurant l'échange de données entre au moins une unité de traitement centrale (CPU) et des terminaux comprenant une unité de commande de centrale (CCU) et des adaptateurs de lignes incorporant un dispositif de balayage des lignes (2), caractérisé en ce que:

les moyens sensibles à l'état du bit de commande de rebouclage comprennent un circuit logique (51) placé dans un circuit d'interface de ligne (LIC) faisant l'interface entre le dispositif de balayage de lignes et la liaison multiplex, et comprenant:

deux premiers registres d'entrée (10 et 12) recevant du dispositif de balayage, à chaque balayage de ligne, le bit à transmettre la ligne et les bits de contrôle associés comprenant le bit de contrôle de rebouclage,

une mémoire (16) dans laquelle une zone est affectée à chaque ligne, qui reçoit sous contrôle d'un circuit de transfert (14) les contenus desdits premiers registres, de façon à assembler les multiplets de données à transmettre pendant les fenêtres de temps affectées aux lignes,

deux registres de sortie (30, 32) le premier recevant sous contrôle d'un circuit de transfert (28) sensible aux informations de début de trame (F) et de durée de fenêtre de temps (S), reçus de la liaison multiplex, les multiplets de données et les bits de contrôle associés aux instants appropriés des zones de la mémoire,

deux seconds registres d'entrée (40 et 42) recevant de la liaison multiplex les bits de données et les bits de contrôle associés,

une mémoire (48) dans laquelle une zone est affectée à chaque ligne et recevant sous contrôle d'un circuit de transfert (46) sensible aux informations de début de trame et de durée de trame, reçus de la liaison multiplex, les bits de données et de contrôle associés reçus dans chaque fenêtre de temps,

deux seconds registres de sortie (15, 17) recevant à chaque période de balayage de ligne le contenu de la zone de mémoire par l'intermédiaire d'un circuit de transfert (50) de façon à désérialiser les bits reçus dans chaque fenêtre de temps et les envoyer bit à bit au dispositif de balayage à chaque instant de balayage d'une ligne, ledit circuit logique comprenant:

un premier ensemble de portes (86, 84, 82, 80) qui sont fermées lorsque le bit de contrôle de rebouclage est dans le second état pour envoyer les bits de données et de contrôle à l'exception du bit de contrôle de rebouclage, contenus dans les premiers registres de sortie sur la liaison multiplex et envoyer les bits reçus de la liaison multiplex dans le second registre d'entrée, et qui sont ouverts lorsque le bit de contrôle de rebouclage est dans le premier état, et

un second ensemble de portes (81, 87) qui sont fermées lorsque le bit de contrôle de rebouclage est dans le premier état et ouvertes lorsque ledit bit est dans le second état pour provoquer l'envoi des bits de données et de contrôle à l'exception du bit de contrôle de rebouclage dans les premiers registres de sorties (30 et 32) au second registre d'entrée (40 et 42).

**Patentansprüche**

1. Schleifenvorrichtung für ein Datenübermittlungssystem mit zumindest einer Multiplexverbindung, bei der jedes Zeitfenster eines Rasters der Übermittlung und dem Empfang von einer Übermittlungsleitung betreffenden Datenbits zugeordnet ist, um zumindest eine Leitung prüfen zu können, ohne den Betrieb der anderen Leitungen derselben Verbindung zu stören, wobei das genannte Übermittlungssystem Mittel umfasst, um Datenbits in jedem der Zeitfenster zu übertragen, und Mittel, um die von der Multiplexverbindung kommende Datenbits zu empfangen, dadurch gekennzeichnet, dass sie folgendes aufweist:

Mittel (2, 12), um ein Prüfbit, das den innerhalb der Zeitfenster zu übermittelnden Bits zugeordnet ist, in einen ersten oder in einen zweiten Zustand zu bringen, der die Betriebsart der Leitung als Schleife oder normal angibt,

Mittel (32, 51) die auf den Status des genannten Schleifen-Prüfbits ansprechen, um während der Zeitfenster, bei denen das Bit sich in einem ersten Zustand (0) befindet, die Übertragung der Datenbits, die von den Übermittlungsmitteln kommen, zu den Empfangsmitteln zu bewirken, oder um auf der Multiplexverbindung die Übertragung der von den Übermittlungsleitungen kommenden Datenbits zu bewirken sowie die von der Multiplexverbindung kommenden und empfangenen Bits während der Zeitfenster, bei denen das Bit sich im zweiten Zustand (1) befindet, dem Übermittlungssystem zu übertragen.

2. Vorrichtung nach Anspruch 1, dadurch gekennzeichnet, dass das Prüfbit eines der Prüfbits des Prüfbytes ist, das zu dem zu übertragenden Bit gehört.

3. Schleifenvorrichtung nach Anspruch 1 oder 2 für ein Übermittlungssystem (cc), das den Datenaustausch zwischen zumindest einer Zentraleinheit (CPU) und Datenendgeräten durchführt, wobei letztere ein zentrales Steuerwerk (CCU) und Ferndaten-Steuereinheiten aufweisen, die eine Linienabtastvorrichtung (2) aufweisen, dadurch gekennzeichnet, dass:

die auf den Zustand des Schleifensteuerbits ansprechenden Mittel eine logische Schaltung (51) beinhalten, die in einer Leitungs-Schnittstellenschaltung (LIC) angeordnet ist, wobei diese Einheit die Schnittstelle zwischen der Zeilenabtastvorrichtung und der Multiplexverbindung bildet und weiter aufweist:

– zwei erste Eingaberegister (10 und 12), die bei jeder Zeilenabtastung von der Abtastvorrichtung das zu übertragende Bit, die Zeile und die dazugehörigen Prüfbits, zu denen das Schleifen-Prüfbit gehört, empfangen,

– einen Speicher (16), in dem jeder Leitung, die unter Kontrolle einer Übergabeschaltung (14) den Inhalt der genannten ersten Register empfängt, ein bestimmter Bereich zugeordnet ist, um derart die zu übermittelnden Daten-Bytes in den Zeitfenstern zusammenzustellen, die den Leitungen zugeordnet sind,

– zwei Ausgaberegister (30, 32), von denen das erste unter der Kontrolle einer Übergabeschaltung (28), die auf die von der Multiplexverbindung erhaltenen Informationen bezüglich Rasteranfang (F) und Dauer der Zeitfenster (S) anspricht, die Daten-Bytes sowie die Prüfbits empfängt, die den geeigneten Zeitpunkten der Speicherbereiche zugeordnet sind,

– zwei zweite Eingaberegister (40 und 42), die die von der Multiplexverbindung übermittelten Datenbits mit den dazugehörigen Prüfbits empfangen,

– einen Speicher (48), in dem jeder Leitung ein Bereich zugeordnet ist und der unter Kontrolle einer Übergabeschaltung (46), die auf die bezüglich Rasteranfang und Rasterdauer von der Multiplexverbindung empfangenen Informationen anspricht, die Datenbits und die dazugehörigen Prüfbits empfängt, die während jedes Zeitfensters eintreffen,

– zwei zweite Ausgaberegister (15, 17), die bei jeder Abtastperiode der Zeile über eine Übergabeschaltung (50) den Inhalt des Speicherbereiches empfängt, um so die während jedes Zeitfensters empfangenen Bits von der Reihe zu trennen und sie Bit um Bit bei jedem Abtastzeitpunkt einer Zeile der Abtastvorrichtung zu übermitteln, wobei die genannte logische Schaltung aufweist:

– eine erste Gruppe von Toren (86, 84, 82, 80), die gesperrt sind, wenn das Schleifen-Prüfbit sich im zweiten Zustand befindet, um die Datenbits und Prüfbits, die sich in den ersten Ausgaberegistern befinden, mit Ausnahme des Schleifen-Prüfbits, über die Multiplexverbindung zu übertragen und um die über die Multiplexverbindung empfangenen Bits im zweiten Eingaberegister zu übermitteln, und die geöffnet sind, wenn das Schleifen-Prüfbit sich im ersten Zustand befindet, und

– eine zweite Gruppe von Toren (81, 87), die gesperrt sind, wenn das Schleifen-Prüfbit sich im ersten Zustand befindet, und die geöffnet sind, wenn das Schleifen-Prüfbit sich im zweiten Zustand befindet, um die Übermittlung der Datenbits und Prüfbits mit Ausnahme des Schleifen-Prüfbits aus dem ersten Ausgaberegister (30 und 32) in das zweite Eingaberegister (40 und 42) zu bewirken.

**Claims**

1. A device for performing wrap tests in a data communication system comprising at least one multiplex link in which each time slot in a given frame is dedicated to the transmission and reception of data bits over a given communication line to test at least one line without affecting the operation of the other lines attached to the same link, said communication system including transmission means for sending data bits within each time slot and reception means for receiving data bits from said multiplex link, said device being characterized in that it includes:

means (2, 12) for setting a wrap control bit associated with the bits to be sent within each time slot to a first or a second state indicating that the line is either in wrap test mode or in normal mode of operation, and

means (32, 51) responsive to the state of said wrap control bit either to cause the data bits received from the transmission means to be sent to the reception means within those time slots during which said bit is in a first state (0) or to cause the data bits received from the transmission means to be sent over the multiplex link, and those received from the multiplex link to be sent to the communication system during those time slots within which said bit is in the second state (1).

2. A device according to claim 1, characterized in that said wrap control bit is one of the control bits in the control byte associated with the bit to be transmitted.

3. A device according to claim 1 or 2 to be used in a communication system (CC) of the type in which data are exchanged between at least one central processing unit (CPU) and terminals including a central control unit (CCU) and line adapters incorporating a line scanner (2), said device being characterized in that:

said means responsive to the state of the wrap control bit include a logic circuit (51) within a line interface circuit (LIC) acting as the interface between the line scanner and the multiplex link, and including:

two first input registers (10 and 12) which receive from the line scanner whenever a line is scanned, the bit to be transmitted over the scanned line and the associated control bits including said wrap control bit,

a memory (16) a storage area of which is allocated to each line and which receives under the control of a transfer circuit (14) the contents of said first registers, so as to assemble the data bytes to be transmitted during the time slots allocated to the lines,

two output registers (30, 32) the first of which receives at appropriate times under the control of a transfer circuit (28) responsive to Frame Start Identification (F) and Signal Element Timing (S) signals from the multiplex link, the data bytes and the associated control bits from the storage areas of said memory,

two second input registers (40 and 42) which receive from the multiplex link the data bits and the associated control bits,

a memory (48) a storage area of which is allocated to each line and which receives within each time slot under the control of a transfer circuit (46) responsive to the Frame Start Identification and Signal Element Timing signals from the multiplex link, the data bits and the associated control bits,

two second input registers (15, 17) which receive during each line scan period the content of said, storage area through a transfer circuit (50) to thereby deserialize the bits received within each time slot and send said bits, one at a time, to the scanner whenever a line is scanned,

said logic circuit including:

a first set of gates (86, 84, 82, 80) which are closed when the wrap control bit is in said second state to send the data and control bits, except the wrap control bit, contained in said first output registers over the multiplex link and to transfer the bits received from the multiplex link to the second input register, and which are open when said wrap control bit is in said first state, and

a second set of gates (81, 87) which are closed when the wrap control bit is in the first state and open when said bit is in the second state, to thereby cause the data and control bits, except said wrap control bit, in said first output registers (30, 32) to be transferred to the second input registers (40, 42).

# FIG. 1

# FIG.2

1 — MICROPROCESSEUR

2 — DISPOSITIF BALAYAGE LIGNES

BUS 3 —

CIRCUIT INTERFACE LIGNE LIC

LIC

LIAISON MULTIPLEX 4

VERS TERMINAUX

F

TRANSMISSION T | E | A | B | C | D | E | A | B

RECEPTION R | E | A | B | C | D | E | A | B

CONTROLE C | E | A | B | C | D | E | B | B

INDICATION I | E | A | B | C | D | E | A | B

5 LIGNES 9600 BITS / SECONDE

T,R,C,I | E | A₁ | B | C | D | E | A₂ | ----B

2 LIGNES A1, A2 A 4800 BITS / SECONDE
4 LIGNES A 9600 BITS / SECONDE

# FIG.3

FIG.4

0166837

BUS 3 VERS ADAPTATEUR

LIAISON MULTIPLEX 4.

13

FIG. 5